# EUROPÄISCHE PATENTSCHRIFT

(11) **EP 4 159 986 B1**
(45) Veröffentlichungstag und Bekanntmachung des Hinweises auf die Patenterteilung: **11.06.2025**
(21) Anmeldenummer: 22198984.1
(22) Anmeldetag: 30.09.2022
(51) Int. Cl.: F01N 3/28, F01N 13/18

(54) **ABGASNACHBEHANDLUNGSVORRICHTUNG UND ABGASNACHBEHANDLUNGSSYSTEM EINER BRENNKRAFTMASCHINE**
EXHAUST GAS AFTERTREATMENT DEVICE AND EXHAUST GAS AFTERTREATMENT SYSTEM OF AN INTERNAL COMBUSTION ENGINE
DISPOSITIF DE POST-TRAITEMENT DES GAZ D'ÉCHAPPEMENT ET SYSTÈME DE POST-TRAITEMENT DES GAZ D'ÉCHAPPEMENT D'UN MOTEUR À COMBUSTION INTERNE

(30) Priorität: 01.10.2021 DE 102021125550
(43) Veröffentlichungstag der Anmeldung: 05.04.2023
(73) Patentinhaber: MAN Energy Solutions SE, 86153 Augsburg (DE)
(72) Erfinder: Söngen, Matthias, 86156 Augsburg (DE)

(56) Entgegenhaltungen:
- EP-A1- 1 621 738
- EP-A1- 3 147 472
- DE-A1- 2 236 592
- DE-A1- 3 406 721

## Beschreibung

Die Erfindung betrifft ein Abgasnachbehandlungssystem einer Brennkraftmaschine nach dem Oberbegriff des Anspruchs 1.

Die hier vorliegende Erfindung betrifft den Bereich sogenannter Großbrennkraftmaschinen, deren Zylinder Kolbendurchmesser von mindestens 140 mm, insbesondere von mindestens 175 mm, aufweisen. Bei solchen Großbrennkraftmaschinen handelt es sich zum Beispiel um Schiffsmotoren. Solche Großbrennkraftmaschinen können als Dieselmotoren, Gasmotoren oder Dual-Fuel-Motoren ausgeführt sein. In Dual-Fuel-Motoren kann in einem ersten Betriebszustand ein flüssiger Kraftstoff, insbesondere ein Dieselkraftstoff, und in einem zweiten Betriebszustand ein gasförmiger Kraftstoff, insbesondere Erdgas, verbrannt werden.

Auch im Bereich der Großbrennkraftmaschinen kommt der Abgasnachbehandlung eine immer wichtigere Rolle zu. So ist aus der DE 10 2016 205 327 A1 ein Abgasnachbehandlungssystem beschrieben, wie es bei Großbrennkraftmaschinen zum Einsatz kommen kann. Das dort offenbarte Abgasnachbehandlungssystem verfügt über einen Reaktorraum, wobei im Reaktorraum ein SCR-Katalysator angeordnet ist. Es ist es bekannt, dass ein solcher SCR-Katalysator mehrere von Abgas durchströmte, parallel geschaltete Abgasnachbehandlungseinheiten aufweist, wobei jede Abgasnachbehandlungseinheit einen Wabenkörper aufweist, der von einem Wabenkörperträger gehalten ist und über den Wabenkörperträger in einem Aufnahmegehäuse angeordnet ist. Der Wabenkörperträger wird auch als Canning bezeichnet, welcher den jeweiligen Wabenkörper unter Freilassen von Stirnseiten desselben außen umgibt.

Bislang bereitet das Anordnen der Abgasnachbehandlungseinheiten im Aufnahmegehäuse dahingehend Schwierigkeiten, dass nur mit großem Aufwand sichergestellt werden kann, dass das Abgas auch vollständig den Wabenkörper durchströmt und nicht über Spalte zwischen dem Wabenkörperträger und dem Aufnahmegehäuse am Wabenkörper vorbeiströmt.

EP 3 147 472 A1 offenbart ein Abgasnachbehandlungssystem einer Brennkraftmaschine nach dem Oberbegriff des Anspruchs 1.

DE 22 36 592 A1 und DE 34 06 721 A1 offenbaren weiteren Stand der Technik.

Hiervon ausgehend liegt der Erfindung die Aufgabe zugrunde, ein neuartiges Abgasnachbehandlungssystem einer Brennkraftmaschine zu schaffen.

Diese Aufgabe wird durch ein Abgasnachbehandlungssystemvorrichtung nach Anspruch 1 gelöst.

Über die in Durchströmungsrichtung und senkrecht zur Durchströmungsrichtung der jeweiligen Abgasnachbehandlungseinheit wirkenden Vorspannelemente kann sichergestellt werden, dass das Abgas durch den mindestens einen Wabenkörper der mindestens einen Abgasnachbehandlungseinheit geleitet wird und nicht über Spalte zwischen dem Wabenkörperträger des jeweiligen Wabenkörpers und dem Aufnahmegehäuse am Wabenkörper vorbeiströmt. Über die in Durchströmungsrichtung der jeweiligen Abgasnachbehandlungseinheit wirkenden ersten Vorspannelemente und die senkrecht zur Durchströmungsrichtung der jeweiligen Abgasnachbehandlungseinheit wirkenden zweiten Vorspannelemente kann dies mit geringem Aufwand bewerkstelligt werden.

Vorzugsweise sind die in Durchströmungsrichtung der jeweiligen Abgasnachbehandlungseinheit wirkenden ersten Vorspannelemente und die senkrecht zur Durchströmungsrichtung der jeweiligen Abgasnachbehandlungseinheit wirkenden zweiten Vorspannelemente von separaten Vorspannbaugruppen ausgebildet sind, wobei jede separate Vorspannbaugruppe ein in Durchströmungsrichtung der jeweiligen Abgasnachbehandlungseinheit wirkendes erstes Vorspannelement und mehrere senkrecht zur Durchströmungsrichtung der jeweiligen Abgasnachbehandlungseinheit wirkende zweiten Vorspannelemente aufweist, und wobei die separaten Vorspannbaugruppen an mindestens einem von sich gegenüberliegenden axialen Enden der jeweiligen Abgasnachbehandlungseinheit auf dieselbe aufgesteckt sind, nämlich auf den Wabenkörperträger der jeweiligen Abgasnachbehandlungseinheit. Dann, wenn die Vorspannelemente von separaten Vorspannbaugruppen ausgebildet sind, die auf die jeweilige Abgasnachbehandlungseinheit aufgesteckt sind, können die Vorspannbaugruppen wiederverwendet werden, insbesondere dann, wenn eine Abgasnachbehandlungseinheit, zum Beispiel infolge eines verblockten Wabenkörpers, ausgetauscht werden muss.

Vorzugsweise sind die in Durchströmungsrichtung der jeweiligen Abgasnachbehandlungseinheit wirkenden ersten Vorspannelemente als faltenbalgartige Vorspannelemente ausgebildet. Über faltenbalgartige Vorspannelemente kann die Vorspannung der jeweiligen Abgasnachbehandlungseinheit in Durchströmungsrichtung der jeweiligen Abgasnachbehandlungseinheit einfach und vorteilhaft bereitgestellt werden.

Vorzugsweise sind die senkrecht zur Durchströmungsrichtung der jeweiligen Abgasnachbehandlungseinheit wirkenden zweiten Vorspannelemente als klinkenartige Ausstellungen ausgebildet sind. Über klinkenartige Ausstellungen kann die Vorspannung der jeweiligen Abgasnachbehandlungseinheit senkrecht zur Durchströmungsrichtung der jeweiligen Abgasnachbehandlungseinheit einfach und zuverlässig bereitgestellt werden.

Vorzugsweise schließen die klinkenartigen Ausstellungen mit der Durchströmungsrichtung einen Winkel von 90° ein. Dann, wenn die klinkenartigen Ausstellungen mit der Durchströmungsrichtung einen Winkel von 90° einschließen, lässt sich die jeweilige Abgasnachbehandlungseinheit zusammen mit den Vorspannelementen besonders vorteilhaft im Aufnahmegehäuse anordnen.

Vorzugsweise sind Dichtflächen an den in Durchströmungsrichtung der jeweiligen Abgasnachbehandlungseinheit wirkenden ersten Vorspannelementen senkrecht zur Durchströmungsrichtung der jeweiligen Abgasnachbehandlungseinheit ausgerichtet. Dies insbesondere dann von Vorteil, wenn in einem Aufnahmegehäuse mehrere Abgasnachbehandlungseinheiten im Sinne einer Reihenschaltung hintereinander angeordnet sind. In diesem Fall sorgt dann eine Fertigungstoleranz im Bereich der Abgasnachbehandlungseinheit für keine Beeinträchtigung der Dichtwirkung an den Dichtflächen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Querschnitt durch ein Beispiel einer nicht erfindungsgemäßen Abgasnachbehandlungsvorrichtung einer Brennkraftmaschine,
- Fig. 2: ein Detail der Fig. 1 in Explosionsdarstellung,
- Fig. 3: einen Querschnitt durch ein Beispiel einer weiteren nicht erfindungsgemäßen Abgasnachbehandlungsvorrichtung einer Brennkraftmaschine,
- Fig. 4: ein Detail der Fig. 3,
- Fig. 5: eine Alternative zum Detail der Fig. 4,
- Fig. 6: ein weiteres Detail der Fig. 3,
- Fig. 7: eine Alternative zum Detail der Fig. 6,
- Fig. 8: eine weitere Alternative zum Detail der Fig. 6,
- Fig. 9: eine weitere Alternative zum Detail der Fig. 6,
- Fig. 10: ein weiteres Detail der Fig. 1 oder 3,
- Fig. 11: einen Ausschnitt aus einer Alternative zum Detail der Fig. 10;
- Fig. 12: einen Querschnitt durch ein weiteres Beispiel einer nicht erfindungsgemäßen Abgasnachbehandlungsvorrichtung einer Brennkraftmaschine,
- Fig. 13: ein Detail der Fig. 12,
- Fig. 14: eine Alternative zum Detail der Fig. 13,
- Fig. 15: einen Querschnitt durch ein weiteres Beispiel einer nicht erfindungsgemäßen Abgasnachbehandlungsvorrichtung einer Brennkraftmaschine,
- Fig. 16: einen Querschnitt durch ein weiteres Beispiel einer nicht erfindungsgemäßen Abgasnachbehandlungsvorrichtung einer Brennkraftmaschine,
- Fig. 17: einen Querschnitt durch ein Beispiel eines erfindungsgemäßen Abgasnachbehandlungssystems einer Brenn-kraftmaschine,
- Fig. 18: ein Detail der Fig. 17 in Explosionsdarstellung,
- Fig. 19: das Detail der Fig. 18 im Zusammenbau,
- Fig. 20: einen Querschnitt durch ein Beispiel eines nicht erfindungsgemäßen Abgasnachbehandlungssystems einer Brenn-kraftmaschine,
- Fig. 21: einen Querschnitt durch ein Beispiel eines nicht erfindungsgemäßen Abgasnachbehandlungssystems einer Brenn-kraftmaschine,
- Fig. 22: ein Detail der Fig. 21,
- Fig. 23: ein Explosionsdarstellung der Fig. 22,
- Fig. 24: einen Querschnitt durch ein weiteres Beispiel eines nicht erfindungsgemäßen Abgasnachbehandlungssystems einer Brennkraftmaschine,
- Fig. 25: den Querschnitt A-A der Fig. 24,
- Fig. 26: einen Querschnitt durch ein weiteres Beispiel eines nicht erfindungsgemäßen Abgasnachbehandlungssystems einer Brennkraftmaschine,
- Fig. 27: den Querschnitt B-B der Fig. 26,
- Fig. 28: einen Querschnitt durch ein weiteres Beispiel eines nicht erfindungsgemäßen Abgasnachbehandlungssystems einer Brennkraftmaschine,
- Fig. 29: den Querschnitt C-C der Fig. 28,
- Fig. 30: eine Seitenansicht eines weiteren Beispiels eines nicht erfindungsgemäßen Abgasnachbehandlungssystems einer Brennkraftmaschine.

Die Erfindung betrifft ein Abgasnachbehandlungssystem einer Brennkraftmaschine, insbesondere einer Großbrennkraftmaschine. Bei einer Großbrennkraftmaschine handelt es sich insbesondere um einen Schiffsmotor, der als Dieselmotor, Gasmotor oder Dual-Fuel-Motor ausgeführt sein kann. Eine Großbrennkraftmaschine verfügt über Zylinder mit einem Kolbendurchmesser von mindestens 140 mm, insbesondere von mindestens 175 mm.

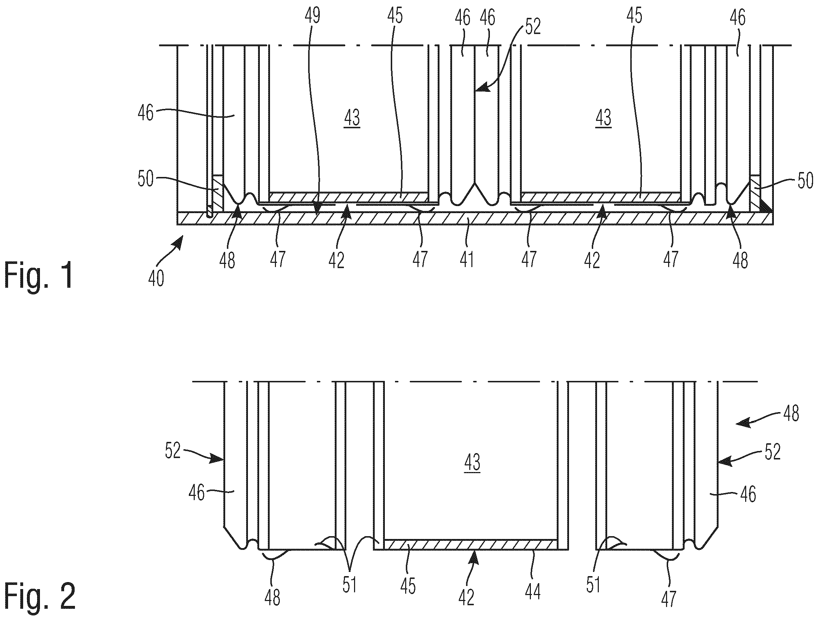

Fig. 1 zeigt Details einer nicht erfindungsgemäßen Abgasnachbehandlungsvorrichtung 40. Die Abgasnachbehandlungsvorrichtung 40 verfügt über ein Aufnahmegehäuse 41 sowie im gezeigten Beispiel über mehrere im Aufnahmegehäuse 41 angeordnete Abgasnachbehandlungseinheiten 42. In Fig. 1 sind zwei in Reihe hintereinander geschaltete Abgasnachbehandlungseinheiten 42 gezeigt, die beide im Aufnahmegehäuse 41 angeordnet sind.

Das Aufnahmegehäuse 41 ist in Fig. 1, 2 rohrartig ausgebildet. Eine Durchströmungsrichtung des Aufnahmegehäuses 41 bzw. der im Aufnahmegehäuse 41 angeordneten Abgasnachbehandlungseinheiten 42 erstreckt sich in Axialrichtung derselben. Dann, wenn das rohrartige Aufnahmegehäuse 41 und die im Aufnahmegehäuse 41 angeordneten Abgasnachbehandlungseinheiten 42 im Querschnitt kreisrund ausgebildet sind, erstreckt sich die Radialrichtung des Aufnahmegehäuses 41 bzw. der im Aufnahmegehäuse 41 angeordneten Abgasnachbehandlungseinheiten 42 senkrecht zur Durchströmungsrichtung derselben. Die Querschnitte von Aufnahmegehäuse 41 und Abgasnachbehandlungseinheiten 42 können auch rechteckig, quadratisch, oval oder dergleichen sein.

Jede Abgasnachbehandlungseinheit 42 verfügt über einen als Katalysator und/oder als Partikelfilter dienenden Wabenkörper 43 sowie über einen den Wabenkörper 43 außen umgebenden, an den Stirnseiten desselben den Wabenkörper 43 freilassenden Wabenkörperträger 44. Der Wabenkörperträger 44 wird auch als Canning bezeichnet. Gemäß Fig. 1 und 2 ist zwischen dem Wabenkörper 43 und dem Wabenkörperträger 44 der dort gezeigten Abgasnachbehandlungseinheiten 42 eine Fasermatte 45 angeordnet. Auch die Fasermatte 45 lässt Stirnseiten des jeweiligen Wabenkörpers 43, die eine Eintrittsseite und eine Austrittsseite für das Abgas definieren, frei.

Die jeweilige Abgasnachbehandlungseinheit 43 ist über Vorspannelemente vorgespannt im Aufnahmegehäuse 41 aufgenommen.

So ist die jeweilige Abgasnachbehandlungseinheit 42 sowohl über in Durchströmungsrichtung der Abgasnachbehandlungseinheit 42 wirkende erste Vorspannelemente 46 als auch über senkrechte zur Durchströmungsrichtung der jeweiligen Abgasnachbehandlungseinheit 42 wirkende zweite Vorspannelemente 47 vorgespannt im Aufnahmegehäuse 41 positioniert. Die Vorspannelemente 46, 47 bewirken eine federelastische Vorspannung der jeweiligen Abgasnachbehandlungseinheit 42 im Aufnahmegehäuse 41 in Durchströmungsrichtung sowie senkrecht zur Durchströmungsrichtung.

In Fig. 1 und 2 sind die in Durchströmungsrichtung bzw. in Axialrichtung der jeweiligen Abgasnachbehandlungseinheit 42 wirkenden ersten Vorspannelemente 46 und die senkrecht zur Durchströmungsrichtung bzw. in Radialrichtung der jeweiligen Abgasnachbehandlungseinheit 42 wirkenden zweiten Vorspannelemente 47 von separaten Vorspannbaugruppen 48 ausgebildet.

Diese separaten Vorspannbaugruppen 48 können insbesondere der Explosionsdarstellung der Fig. 2 entnommen werden. Jede separate Vorspannbaugruppe 48 weist ein in Durchströmungsrichtung der jeweiligen Abgasnachbehandlungseinheit 42 wirkendes erstes Vorspannelement 46 und mehrere senkrecht zur Durchströmungsrichtung der jeweiligen Abgasnachbehandlungseinheit 42 wirkende zweite Vorspannelemente 47 auf.

Die separaten Vorspannbaugruppen 48 sind in Fig. 1, 2 an sich gegenüberliegenden axialen Enden der jeweiligen Abgasnachbehandlungseinheit 42 auf dieselbe aufgesteckt, nämlich auf den Wabenkörperträger 44 der jeweiligen Abgasnachbehandlungseinheit 42, wiederum unter Freilassen der Stirnseiten des jeweiligen Wabenkörpers 43, welche die Eintrittsseite und die Austrittsseite des jeweiligen Wabenkörpers 43 und damit der jeweiligen Abgasnachbehandlungseinheit 42 für das zu reinigende Abgas dienen.

Dann, wenn das Aufnahmegehäuse 41 in Durchströmungsrichtung gesehen im Querschnitt kreisrund ausgebildet, sind auch die Abgasnachbehandlungseinheiten 42 und die separaten Vorspannbaugruppen 48 im Querschnitt kreisrund ausgebildet. In diesem Fall sind dann über den Umfang der Vorspannelemente 48 mehrere zweite Vorspannelemente 47, die dann der Vorspannung in Radialrichtung dienen, verteilt.

Die Querschnittskontur von Aufnahmegehäuse 41 und Abgasnachbehandlungseinheiten 42 kann auch rechteckig, quadratisch, oval oder dergleichen sein.

In Fig. 1 und 2 sind die in Durchströmungsrichtung der jeweiligen Abgasnachbehandlungseinheit 42 wirkenden ersten Vorspannelemente 46 als faltenbalgartige Vorspannelemente ausgebildet.

Die senkrecht zur Durchströmungsrichtung der jeweiligen Abgasnachbehandlungseinheit 42 wirkenden zweiten Vorspannelemente 47 sind als klinkenartige Ausstellungen ausgebildet, die nach radial außen aus der jeweiligen Vorspannbaugruppe 48 herausgebogen sind. Diese, vorzugsweise als klinkenartige Ausstellungen ausgebildeten, zweiten Vorspannelemente 47 stützen sich auf einer Innenwand 49 des Aufnahmegehäuses 41 ab.

Die in Durchströmungsrichtung der jeweiligen Abgasnachbehandlungseinheit 42 wirkenden, vorzugsweise als Faltenbalge ausgebildeten ersten Vorspannelemente 46 stützen sich dann, wenn sich an eine Abgasnachbehandlungseinheit 42 eine weitere Abgasnachbehandlungseinheit 42 anschließt, an einem angrenzenden ersten Vorspannelement 46 der angrenzenden Abgasnachbehandlungseinheit 42 ab. Anderenfalls stützen sich diese ersten Vorspannelemente 46, die faltenbalgartig ausgebildet sind, an einem sich nach radial innen erstreckenden Vorsprung 50 des Aufnahmegehäuses 41 ab.

Wie Fig. 2 entnommen werden kann, sind an den separaten Vorspannbaugruppen 48 nicht nur die nach außen ausgestellten zweiten Vorspannelemente 47 ausgebildet, sondern darüber hinaus auch nach radial innen ausgestellte dritte Vorspannelemente 51. Diese nach radial innen ausgestellten, dritten Vorspannelemente 51 dienen der vorspannenden Aufnahme der Abgasnachbehandlungseinheit 42 in den separaten Vorspannbaugruppen 48. Diese nach radial innen ausgestellten Vorspannelemente 51 stützen sich demnach auf dem Wabenkörperträger 44 der jeweiligen Abgasnachbehandlungseinheit 42 federelastisch ab.

Gemäß Fig. 1 verlaufen Dichtflächen 52 an den in Durchströmungsrichtung wirkenden ersten Vorspannelementen 46 senkrecht zur Durchströmungsrichtung der jeweiligen Abgasnachbehandlungseinheit 42. Dies ist von Vorteil, um zu vermeiden, dass Fertigungstoleranzen im Bereich der Abgasnachbehandlungseinheiten 42 die Dichtwirkung zwischen aneinander angrenzenden ersten Vorspannelementen 46 aneinander angrenzender Abgasnachbehandlungseinheiten 42 beeinträchtigen.

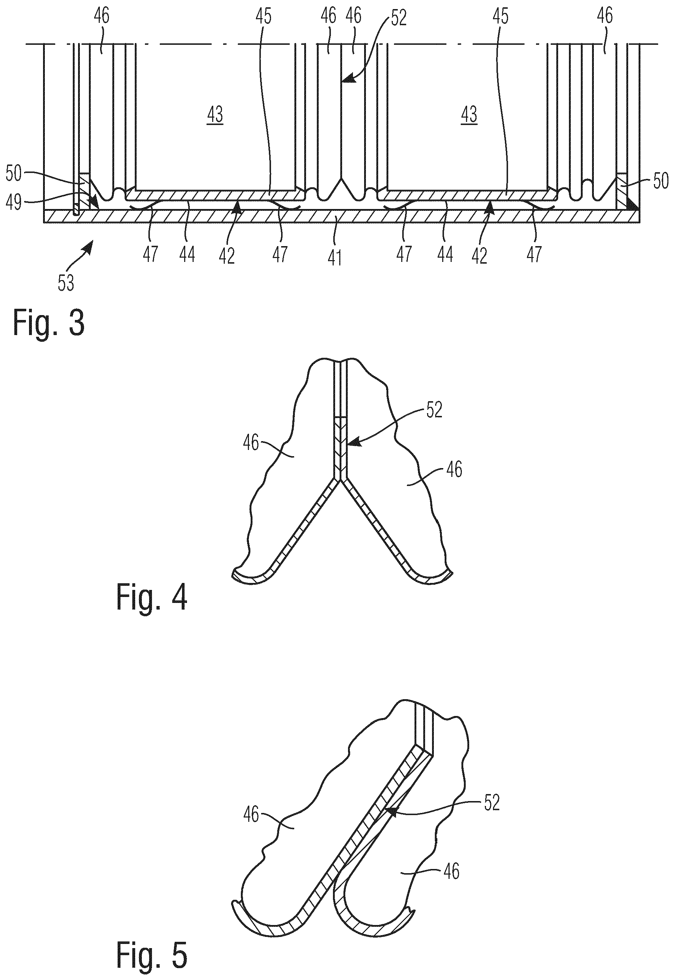

Fig. 3 zeigt einen ausschnittsweisen Querschnitt durch eine weitere nicht erfindungsgemäße Abgasnachbehandlungsvorrichtung 53, die hinsichtlich ihres grundsätzlichen Aufbaus der Abgasnachbehandlungsvorrichtung 40 der Fig. 1 entspricht. Daher werden für gleiche Baugruppen gleiche Bezugsziffern verwendet und es wird nachfolgend unter Bezugnahme auf Fig. 3 auf solche Details eingegangen, durch die sich die Abgasnachbehandlungsvorrichtung 53 der Fig. 3 von der Abgasnachbehandlungseinheit 40 der Fig. 1 unterscheidet. Während in Fig. 1 die ersten Vorspannelemente 46 und die zweiten Vorspannelemente 47 beide von separaten Vorspannbaugruppen 48 bereitgestellt sind, sind in Fig. 3 sowohl die ersten Vorspannelemente 46 als auch die zweiten Vorspannelemente 47 als integraler Bestandteil des Wabenkörperträgers 44 und damit des Canning ausgebildet. Damit reduziert sich zwar die Anzahl der einzelnen Baugruppen, bei Austausch einer Abgasnachbehandlungseinheit 42 können jedoch die Vorspannelemente 46, 47 nicht wiederverwendet werden.

Fig. 4, die ein Detail der Fig. 3 im Bereich der aneinander angrenzenden ersten Vorspannelemente 46 der einander angrenzenden Abgasnachbehandlungseinheiten 42 zeigt, kann entnommen werden, dass die Dichtflächen 52 der ersten Vorspannelemente 46 senkrecht zu der Durchströmungsrichtung der Abgasnachbehandlungseinheiten 42 verlaufen.

Demgegenüber zeigt Fig. 5 eine Abwandlung für das Detail der Fig. 4, bei welcher die Dichtflächen 52 der aneinander angrenzenden ersten Vorspannelemente 46 von aneinander angrenzenden Abgasnachbehandlungseinheiten 42 nicht senkrecht zur Durchströmungsrichtung der jeweiligen Abgasnachbehandlungseinheiten 42 verlaufen, sondern vielmehr gegenüber der Radialrichtung, die senkrecht zur Durchströmungsrichtung verläuft, schräg gestellt sind.

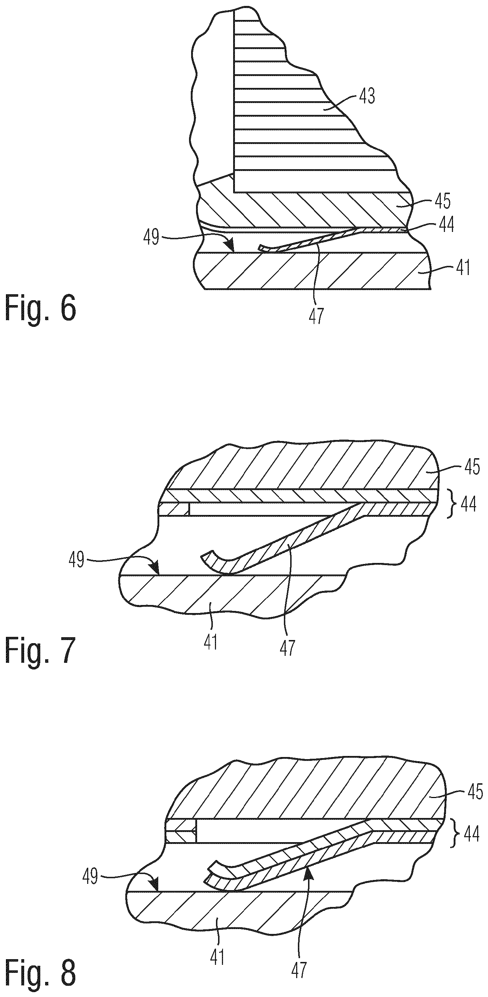

Fig. 6 bis 11 zeigen Details und mögliche Ausführungen der zweiten Vorspannelemente 47. So ist in Fig. 6 gezeigt, dass das dort gezeigte zweite Vorspannelement 47 wieder integraler Bestandteil des Wabenkörperträgers 44 bzw. des Canning ist, wobei sowohl der Wabenkörperträger 44 als auch das zweite Vorspannelement 47, welches als klinkenartige Ausstellung ausgebildet ist, jeweils einwandig ausgebildet sind. Demgegenüber zeigt Fig. 7 eine Ausgestaltung, bei welcher der Wabenkörperträger 44 mehrwandig, nämlich zweiwandig, ausgebildet und das zweite Vorspannelement 47, welches als klinkenartige Ausstellung ausgebildet ist, einwandig ausgebildet ist. In Fig. 8, die eine weitere Abwandlung zeigt, sind sowohl der Wabenkörperträger 44 als auch das gezeigte zweite Vorspannelement 47 jeweils mehrwandig ausgebildet. Von den in Fig. 6, 7 und 8 gezeigten Varianten verfügt die Variante der Fig. 7 über den Vorteil, dass der Fasermatte 45 über seine gesamte axiale Erstreckung vom Wabenaufnahmekörper 44 gestützt ist und darüber hinaus einfach das zweite Vorspannelement 47 ausgebildet werden kann.

Obwohl sich Fig. 6, 7 und 8 auf zweite Vorspannelemente 47 beziehen, die als integraler Bestandteil des Wabenkörperträgers 44 ausgebildet sind, sei darauf hingewiesen, dass die Varianten der Fig. 6, 7 und 8 auch bei der Abgasnachbehandlungsvorrichtung 40 der Fig. 1 zum Einsatz kommen können. Hier bezieht sich dann die Einwandigkeit oder Mehrwandigkeit nicht auf den Wabenkörperträger 44, sondern vielmehr auf die separaten Vorspannbaugruppen 46, welche die Vorspannelemente 46 und 47 bereitstellen.

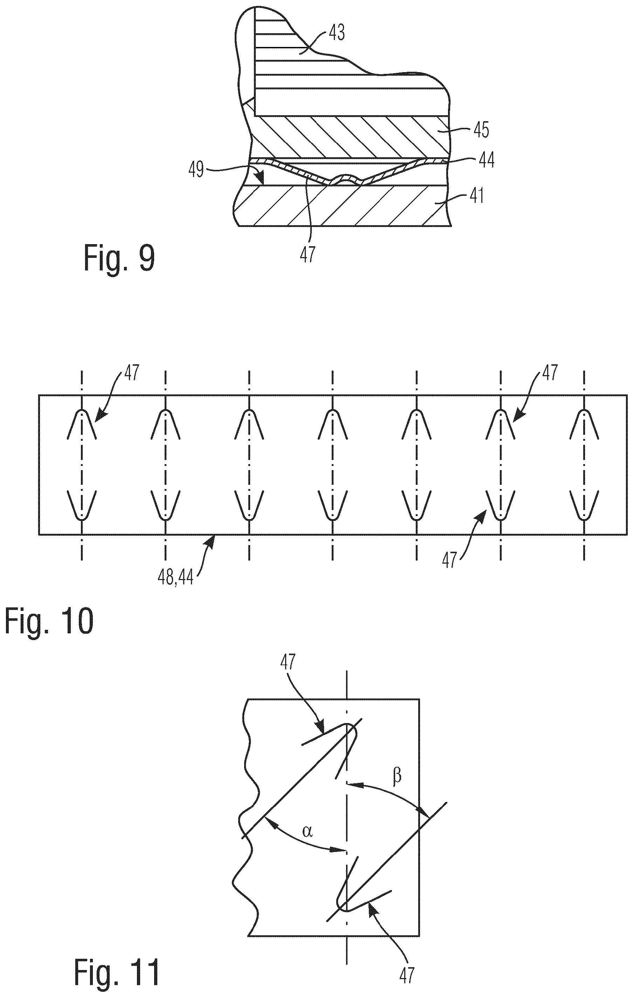

Fig. 9 zeigt eine Abwandlung der Fig. 6, in welcher das dort gezeigte zweite Vorspannelement 47 einwandig und in Brückenform ausgebildet ist. Dieses ist wieder integraler Bestandteil des Wabenkörperträgers 44. Auch in Fig. 9 kann die Mehrwandigkeit der Fig. 7 und 8 zum Einsatz kommen. Auch kann in Fig. 1, 2 ein zweites Vorspannelement 47 in Brückenform ausgeführt sein.

Fig. 10 zeigt eine Abwicklung entweder einer separaten Vorspannbaugruppe 48 oder eines Wabenkörperträgers 44 im Bereich von zweiten Vorspannelemente 47. In Fig. 10 sind lediglich die zweiten Vorspannelemente 47 gezeigt, die nach radial außen ausgestellt sind und im verbauten Zustand an der Innenfläche 49 des Aufnahmegehäuses 41 zur Anlage kommen. Bei diesen zweiten Vorspannelementen 47 handelt es sich, wie bereits ausgeführt, vorzugsweise um klingenartige Ausstellungen, wobei diese klinkenartigen Ausstellungen mit der Durchströmungsrichtung der jeweiligen Abgasnachbehandlungseinheit 42 einen Winkel α bzw. einen Winkel β einschließen. Im Bereich des eintrittsseitigen Endes der jeweiligen Abgasnachbehandlungseinheit 42 schließen die zweiten Vorspannelemente 47 den α und im Bereich des austrittsseitigen Endes schließen die zweiten Vorspannelemente 47 den Winkel β mit der Durchströmungsrichtung der jeweiligen Abgasnachbehandlungseinheit 42 ein, wobei die klinkenartigen Ausstellungen gemäß Fig. 10 vorzugsweise gegenläufig bzw. um 180° zueinander versetzt sind. Der Winkel α als auch der Winkel β können gleich groß aber auch unterschiedlich groß sein.

Besonders bevorzugt ist eine Ausführung, in welcher sowohl der Winkel α als auch der Winkel β jeweils 90° betragen. In diesem Fall definieren die zweiten Vorspannelemente 47 dann auch in vorteilhafter Weise Einführrampen für die Abgasnachbehandlungseinheiten 42 in das Aufnahmegehäuse 41.

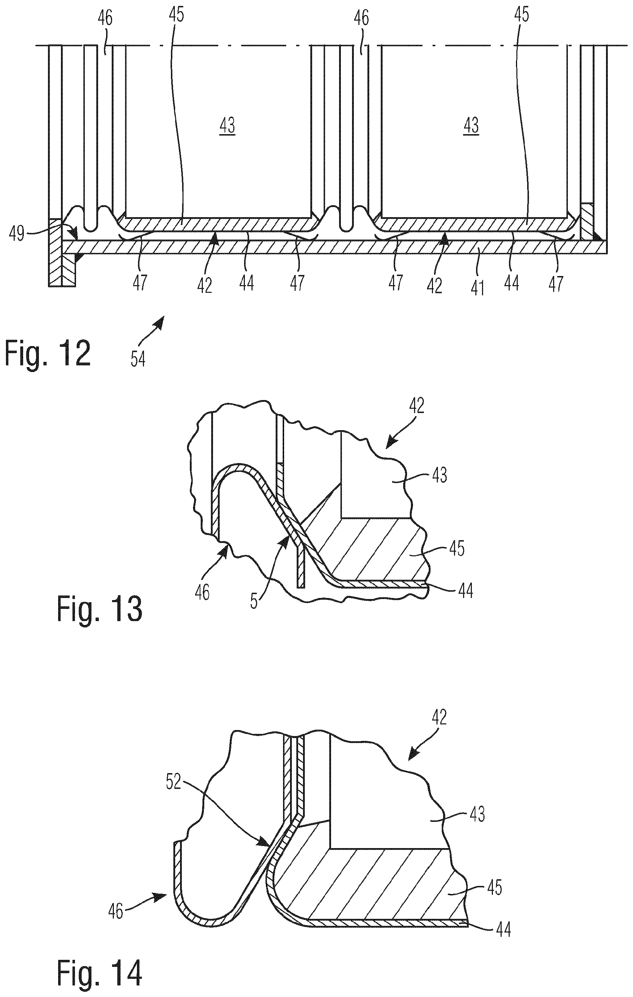

Fig. 12 zeigt ein weiteres Beispiel einer nicht erfindungsgemäßen Abgasnachbehandlungsvorrichtung 54. Auch für Fig. 12 werden für gleiche Baugruppen gleiche Bezugsziffern wie in Fig. 1 verwendet. In Fig. 12 sind die zweiten Spannelemente 47, die wiederum als klinkenartige Ausstellungen ausgebildet sind und an der Wand 49 des Aufnahmegehäuses 41 zur Anlage kommen, integraler Bestandteil des Wabenkörperträgers 44 und damit des Canning. Insofern entspricht Fig. 12 der Fig. 3. Die ersten in Durchströmungsrichtung der Abgasnachbehandlungseinheiten 42 wirkenden ersten Vorspannelemente 46 sind jedoch in Fig. 12 wie in Fig. 1 wiederum als separate Baugruppen ausgeführt, wobei jedoch im Unterschied zur Fig. 1 nicht an beiden axialen Enden einer jeweiligen Abgasnachbehandlungseinheit 42 ein separates erstes Vorspannelement 46 aufgesteckt ist, sondern lediglich an einem axialen Ende derselben.

Fig. 13 zeigt ein Detail der Fig. 6 im Bereich von zwei aneinander angrenzenden Abgasnachbehandlungseinheiten 42. Dabei ist gemäß Fig. 13 die Dichtfläche 52 zwischen dem in Fig. 13 gezeigten ersten Vorspannelement 46 und einem angrenzenden Abschnitt des Wabenkörperträgers 44 der angrenzenden Abgasnachbehandlungseinheit 42 gegenüber der Radialrichtung, die senkrecht zur Durchströmungsrichtung verläuft, schräg gestellt. Auch Fig. 14, die eine Abwandlung des Details der Fig. 13 zeigt, zeigt eine derartige Schrägstellung der Dichtfläche 52, die jedoch im Unterschied zur Fig. 13 in Richtung auf die angrenzende Abgasnachbehandlungseinheit 42 zugeneigt ist und nicht, wie in Fig. 13 gezeigt, von derselben weggeneigt ist.

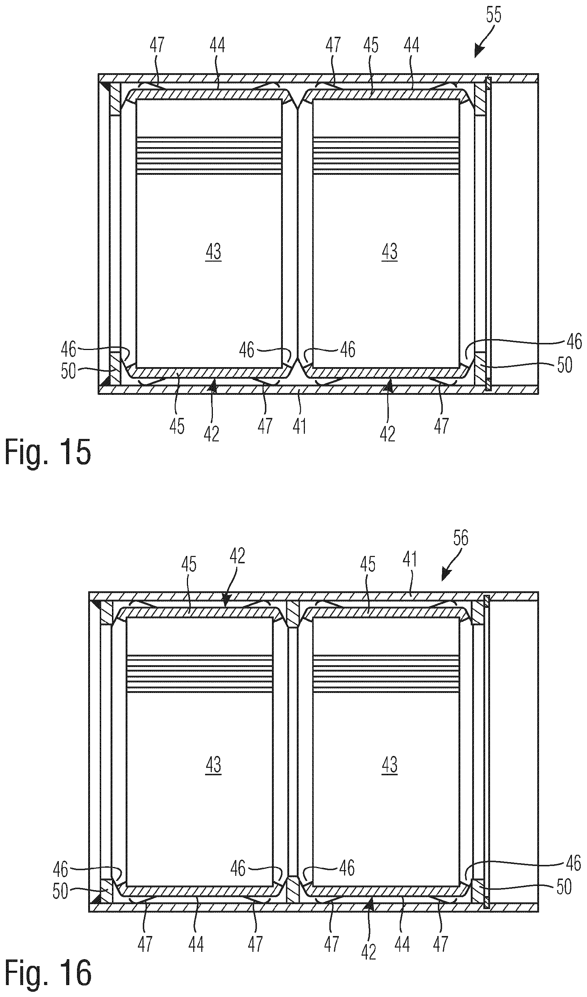

Fig. 15 und 16 zeigen weitere Beispiele von Abgasnachbehandlungsvorrichtungen 55 und 56. Die Abgasnachbehandlungseinheiten 55 und 56 der Fig. 15 und 16 entsprechen grundsätzlich der Abgasnachbehandlungseinheit 53 der Fig. 3, auch in Fig. 15 und 16 sind demnach die ersten Vorspannelemente 46 und die zweiten Vorspannelemente 47 als integrale Bestandteile der Wabenkörperträger 44 und damit des jeweiligen Canning ausgebildet.

Die Beispiele der Fig. 15 und 16 unterscheiden sich jedoch von dem der Fig. 3 dadurch, dass die ersten, in Durchströmungsrichtung der jeweiligen Abgasnachbehandlungseinheit 42 wirksamen Vorspannelemente 46 nicht faltenbalgartig ausgebildet sind, sondern vielmehr durch eine entsprechende Wandstärke des Wabenkörperträgers 44 ausgebildet sind.

Die Fig. 15 und 16 unterscheiden sich untereinander dadurch, dass in Fig. 16 aneinander angrenzende Abgasnachbehandlungseinheiten 42 nicht unmittelbar gegeneinander im Bereich der ersten Vorspannelemente 46 abdichten, sondern vielmehr gegenüber einem nach radial innen vorstehenden Vorsprung 50 des Aufnahmegehäuses 41.

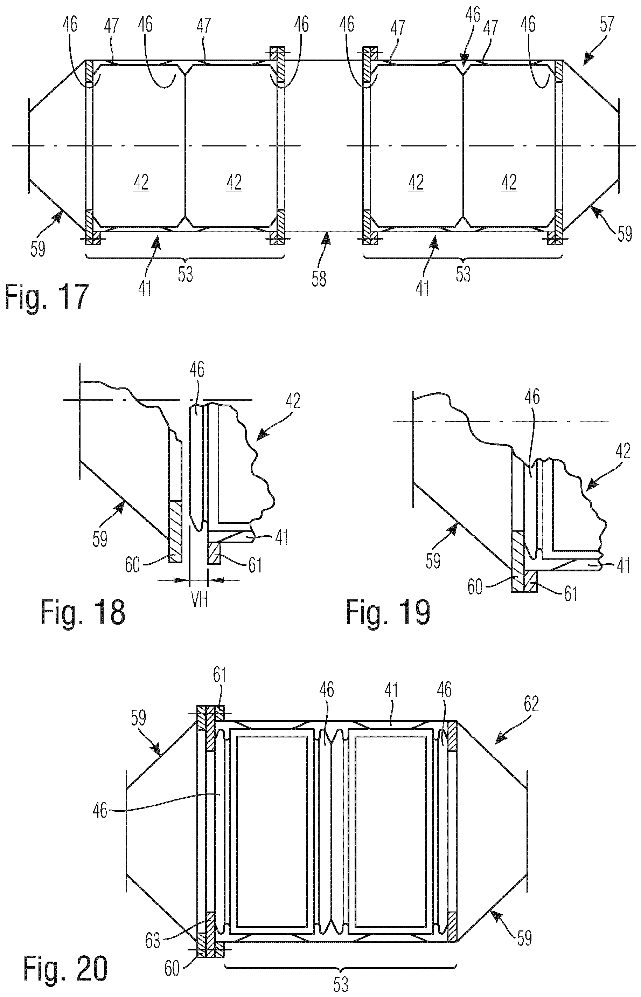

Fig. 17 zeigt ein Ausführungsbeispiel eines erfindungsgemäßen Abgasnachbehandlungssystems 57, welches zwei Abgasnachbehandlungsvorrichtungen 53 gemäß Fig. 3 umfasst. Jede der beiden Abgasnachbehandlungsvorrichtungen 53 verfügt über ein Aufnahmegehäuse 41 sowie zwei im Aufnahmegehäuse 41 positionierte Abgasnachbehandlungseinheiten 42.

Die beiden Abgasnachbehandlungsvorrichtungen 53 sind in Reihe hintereinandergeschaltet. Abgas, welches das Abgasnachbehandlungssystem 57 der Fig. 17 durchströmt, strömt demnach durch alle Abgasnachbehandlungseinheiten 42. Das Abgasnachbehandlungssystem 57 der Fig. 17 ist einflutig.

Gemäß Fig. 17 ist zwischen die beiden Abgasnachbehandlungsvorrichtungen 53 ein Gehäuse 58 geschaltet, welches zum Beispiel der Aufnahme von Sensoren, wie zum Beispiel Temperatursensoren oder auch Drucksensoren, dient. Zusätzlich kann das Gehäuse 58 zum Beispiel eine Vorrichtung aufnehmen, um ein Reduktionsmittel in den Abgasstrom einzubringen. Auch kann das Gehäuse 58 einen Rußbläser aufnehmen.

An den voneinander abgewandten Enden der beiden Abgasnachbehandlungsvorrichtungen 53 schließen sich Deckel 59 an, wobei über die Deckel 59 des Abgasnachbehandlungssystems 57 an Abgasleitungen (nicht gezeigt) angeschlossen werden kann.

Fig. 18 und 19 zeigen Details der Verbindung des Aufnahmegehäuses 41 einer der in Fig. 17 gezeigten Abgasnachbehandlungsvorrichtungen 53 mit einem der Deckel 59. Bei demontiertem Deckel 59 (siehe Fig. 18) steht das entsprechende Ende der entsprechenden Abgasnachbehandlungseinheit 42 mit einem definierten Vorspannhub **VH** in Durchströmungsrichtung aus dem Aufnahmegehäuse 41 heraus.

Bei montiertem Deckel 59 (siehe Fig. 19) werden die in Durchströmungsrichtung wirksamen Vorspannelemente 46 der im Aufnahmegehäuse 41 angeordneten Abgasnachbehandlungseinheiten 42 komprimiert, um einen Flansch 60 des Deckels 59 an einem Flansch 61 des Aufnahmegehäuses 41 zur Anlage zu bringen und dann Deckel 59 und Aufnahmegehäuse 41 zum Beispiel durch Verschrauben miteinander zu verbinden.

Fig. 20 zeigt einen Querschnitt durch ein zweites Abgasnachbehandlungssystem 62, welches lediglich eine einzige Abgasnachbehandlungsvorrichtung 53 aufweist, wobei sich zu beiden Seiten derselben unmittelbar die Deckel 59 anschließen.

In Fig. 20 kommt am linken Ende der Abgasnachbehandlungsvorrichtung 53 zwischen dem Flansch 61 des Aufnahmegehäuses 41 und dem Flansch 60 des Deckels 59 eine Zwischenscheibe 63 zum Einsatz, um den Deckel 59 an dem Aufnahmegehäuse 41 unter Komprimieren der ersten Vorspannelemente 46 zu verbinden. Über die Zwischenscheibe 53 kann die Vorspannkraft in Durchströmungsrichtung eingestellt werden.

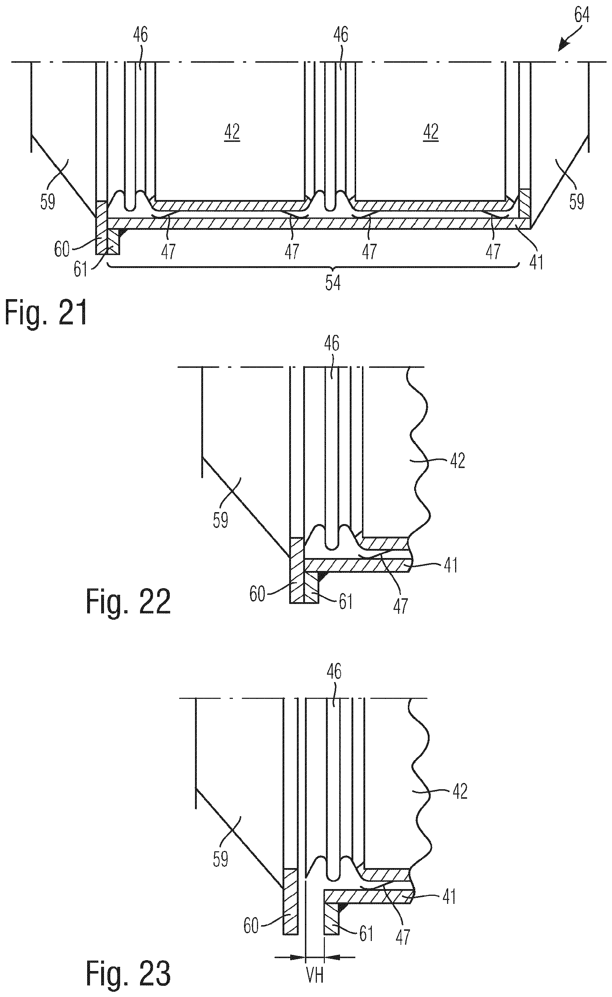

Fig. 21, 22 und 23 zeigen Details eines dritten Abgasnachbehandlungssystems 64 mit einer Abgasnachbehandlungsvorrichtung 54 gemäß Fig. 12. Hinsichtlich aller übrigen Details stimmt jedoch Fig. 21, 22 und 23 mit der Fig. 20 und im Hinblick auf die Verbindung des Deckels 59 mit dem Aufnahmegehäuse 41 mit den Details der Fig. 18 und 19 überein, sodass wiederum für gleiche Baugruppen gleiche Bezugsziffern verwendet werden und auf die obigen Ausführungen verwiesen werden kann.

Es sei darauf hingewiesen, dass in Fig. 17 bis 23 auch die Abgasnachbehandlungsvorrichtungen 40 der Fig. 1, 2 in einem Abgasnachbehandlungssystem verbaut werden können, ebenso die Abgasnachbehandlungsvorrichtungen 55, 56 der Fig. 15 und 16.

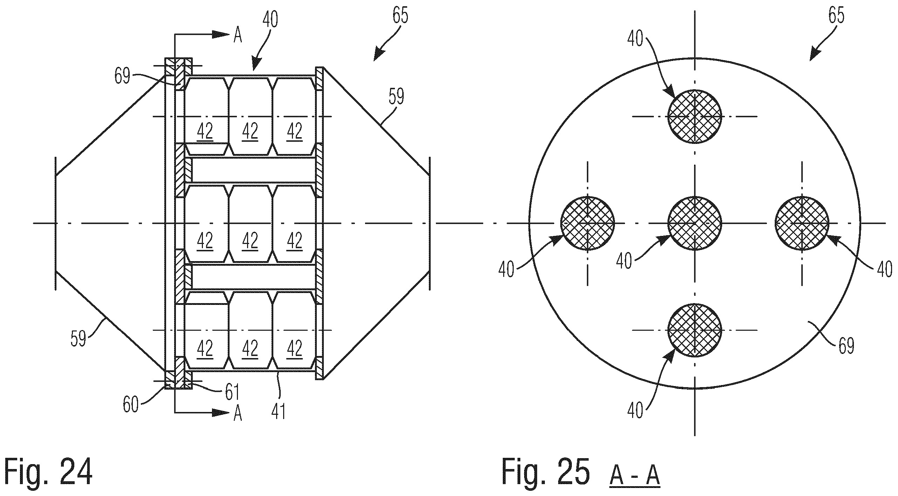

Während Fig. 17 bis 23 jeweils Details einflutiger Abgasnachbehandlungssysteme 57, 62, 64 zeigen, zeigen Fig. 24, 25 und Fig. 26, 27 und Fig. 28, 29 sowie Fig. 30 jeweils unterschiedliche Ansichten mehrflutiger Abgasnachbehandlungssysteme 65, 66, 67 und 68. Fig. 24 und 25 zeigen ein mehrflutigen Abgasnachbehandlungssystems 65, welches insgesamt fünf parallel geschaltete Abgasnachbehandlungsvorrichtungen 40 gemäß Fig. 1 umfasst, jedoch mit dem Unterschied, dass bei Fig. 24 und 25 im jeweiligen Aufnahmegehäuse jeweils drei Abgasnachbehandlungseinheit 42 in Reihe hintereinandergeschaltet sind und nicht, wie in Fig. 1, 2 lediglich zwei Abgasnachbehandlungseinheiten 42.

In Fig. 24 und 25 schließt sich zu den jeweiligen Enden der fünf parallel geschalteten Abgasnachbehandlungsvorrichtungen 40 jeweils ein gemeinsamer Deckel 59 an. Dabei kommt In Fig. 24 und 25 zwischen dem Flansch 60 des linken Deckels 59 und dem Flansch 61 der Aufnahmegehäuse 41 ein für alle Aufnahmegehäuse 41 aller parallel geschalteter Abgasnachbehandlungsvorrichtungen 40 gemeinsamer Spanndeckel 69 zum Einsatz, der auch die Funktion der Zwischenscheibe 63 der Fig. 20 übernimmt.

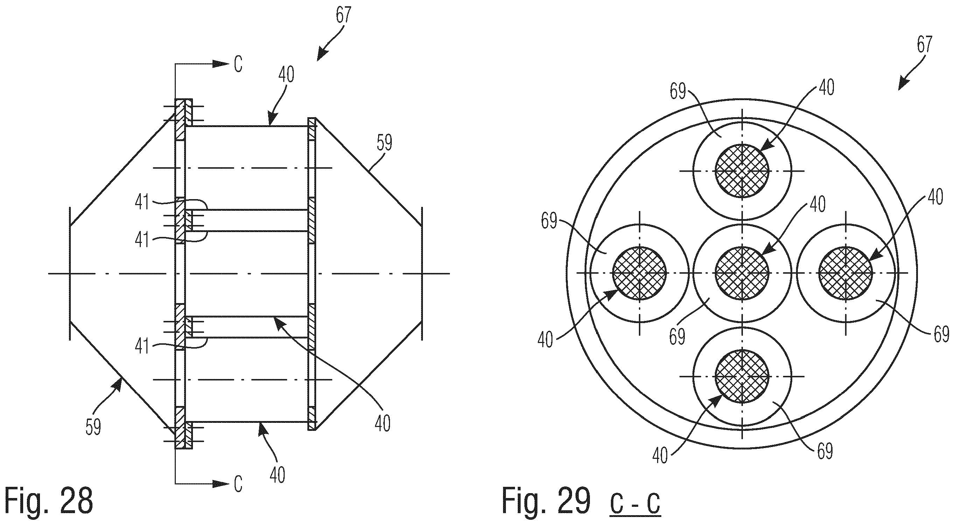

Demgegenüber zeigen Fig. 28 und 29 ein Abgasnachbehandlungssystem 67, bei welchem zwischen dem linken Deckel 59 und den Aufnahmegehäusen 41 der parallel geschalteten Abgasnachbehandlungsvorrichtungen 40 für jede Abgasnachbehandlungsvorrichtung 40 ein individueller Spanndeckel 69 zum Einsatz kommt.

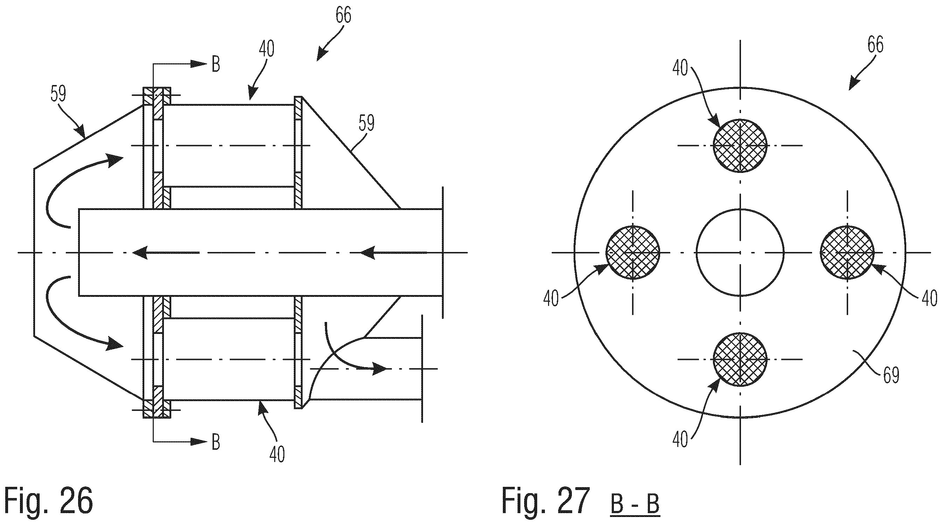

Bei den Abgasnachbehandlungssystemen 65 und 67 der Fig. 24, 25 bzw. der Fig. 28, 29 sind die Einströmseite und die Ausströmseite an sich gegenüberliegenden Enden des jeweiligen Abgasnachbehandlungssystems 65, 67 angeordnet. Demgegenüber zeigen Fig. 26 und 27 ein Abgasnachbehandlungssystem 66, bei welchem Einströmseite und Ausströmseite des Abgasnachbehandlungssystems 26 an demselben Ende bzw. derselben Seite des Abgasnachbehandlungssystems 66 ausgebildet sind.

In Fig. 26 und 27 sind vier Abgasnachbehandlungsvorrichtungen 40 parallelgeschaltet, und zwar zwischen den Deckeln 59. Während in Fig. 24 und 25 einer der Deckel 59 eine Eintrittsseite und der gegenüberliegende Deckel 59 eine Austrittsseite des jeweiligen Abgasnachbehandlungssystems bildet, sind in Fig. 26 und 27 Eintrittsseite und Austrittsseite jeweils am rechten Deckel 59 der Fig. 6 bereitgehalten. Am gegenüberliegenden Deckel 59 findet eine Strömungsumkehr für das Abgas statt. Eine solche Strömungsumkehr für das Abgas ist bereits aus der DE 10 2016 205 327 A1 bekannt. In Fig. 26 verdeutlichen Pfeile die Abgasströmung durch das Abgasnachbehandlungssystems 66 der Fig. 26 und 27.

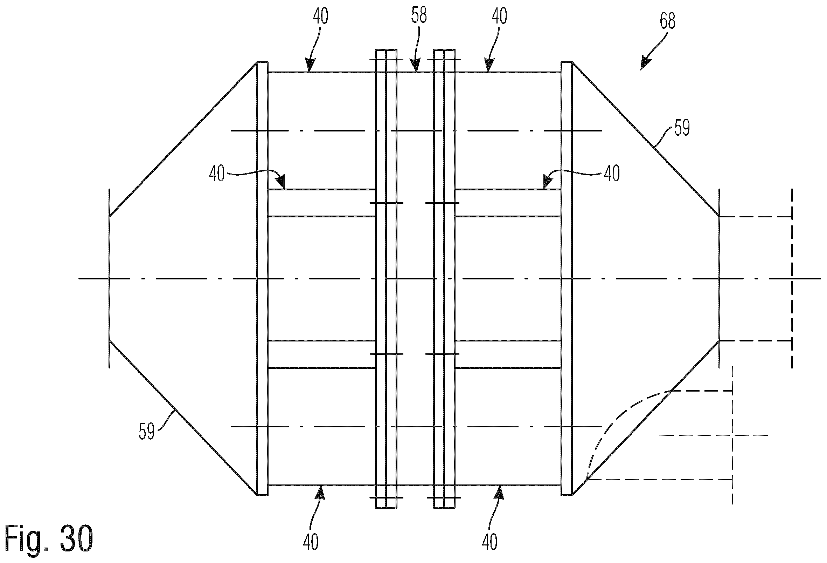

Fig. 30 zeigt ein Abgasnachbehandlungssystem 68, bei welchem jeweils zwei Abgasnachbehandlungsvorrichtungen 14 in Reihe hintereinander und mehrere solcher Reihenschaltungen parallel zueinander zwischen zwei Deckeln 59 angeordnet sind. Dabei kann in Übereinstimmung zur Fig. 17 zwischen zwei in Reihe geschalteten Abgasnachbehandlungsvorrichtungen 40 wiederum ein Gehäuse 58 zur Aufnahme einer Sensorik oder zur Aufnahme von Rußbläsern oder zur Aufnahme von Einbringeinrichtungen für Reduktionsmittel angeordnet sein. In Fig. 30 kann die Strömungsführung des Abgases entweder wie in Fig. 24, 25 oder wie in Fig. 26, 27 ausgeführt sein.

Dann, wenn in einem Aufnahmegehäuse 41 mehrere Abgasnachbehandlungseinheiten 42 angeordnet sind, und/oder dann, wenn mehrere Abgasnachbehandlungsvorrichtungen in Reihe geschaltet sind, können die in Reihe geschalteten Abgasnachbehandlungseinheiten 42 identisch oder auch unterschiedlich ausgeführt sein. So ist es zum Beispiel möglich, dass im Ausführungsbeispiel der Fig. 17 die beiden linken Abgasnachbehandlungseinheiten 42 als Partikelfilter und die beiden rechten Abgasnachbehandlungseinheiten 42 als SCR-Katalysatoren oder als NOx-Speicherkatalysatoren ausgeführt sind. Auch ist es möglich, eine Position einer Abgasnachbehandlungseinheit 42 freizulassen und dort lediglich einen Platzhalter anzuordnen, der kann keine Abgasnachbehandlungsfunktion übernimmt.

Die Vorspannkräfte für die Vorspannelemente 46, 47 können insbesondere durch Wahl des Werkstoffs und/oder durch die Wandstärke und/oder durch die Geometrie und/oder durch die Anzahl der Wandungen der Vorspannelemente 46, 47 eingestellt werden. Wie oben ausgeführt, können die Vorspannelemente 46, 47 einwandig oder mehrwandig ausgeführt sein.

Bei den faltenbalgartigen Vorspannelementen 46 kann die Anzahl der Balge bzw. Wellen variiert werden. Bei den klinkenartigen Vorspannelementen 47 kann die Anzahl derselben variiert werden.

Aus den oben beschriebenen Komponenten der Aufnahmegehäuse 41, Abgasnachbehandlungseinheiten 42, Gehäuse 58 und Deckel 59 kann im Sinne eines Baukastensystems ein Abgasnachbehandlungssystem nach Bedarf ausgebaut werden. Aufnahmegehäuse 41 und Abgasnachbehandlungseinheiten 42 können grobtoleriert ausgeführt sein. Die Vorspannelemente 26, 27 kompensieren solche Toleranzen. Die Vorspannelemente 26, 27 stellen ferner eine Schwingungsdämpfung bereit und reduzieren Vibrationen im Abgassystem.

### Bezugszeichenliste

- 40: Abgasnachbehandlungsvorrichtung
- 41: Aufnahmegehäuse
- 42: Abgasnachbehandlungseinheit
- 43: Wabenkörper
- 44: Wabenkörperträger
- 45: Fasermatte
- 46: erstes Vorspannelement
- 47: zweites Vorspannelement
- 48: Vorspannbaugruppe
- 49: Innenfläche
- 50: Vorsprung
- 51: drittes Vorspannelement
- 52: Dichtfläche
- 53: Abgasnachbehandlungsvorrichtung
- 54: Abgasnachbehandlungsvorrichtung
- 55: Abgasnachbehandlungsvorrichtung
- 56: Abgasnachbehandlungsvorrichtung
- 57: Abgasnachbehandlungssystem
- 58: Gehäuse
- 59: Deckel
- 60: Flansch
- 61: Flansch
- 62: Abgasnachbehandlungssystem
- 63: Zwischenscheibe
- 64: Abgasnachbehandlungssystem
- 65: Abgasnachbehandlungssystem
- 66: Abgasnachbehandlungssystem
- 67: Abgasnachbehandlungssystem
- 68: Abgasnachbehandlungssystem
- 69: Spanndeckel

## Patentansprüche

1. Abgasnachbehandlungssystem (57) einer Brennkraftmaschine,
mit einer Abgasnachbehandlungsvorrichtung (53)
mit einem Aufnahmegehäuse (41),
mit mindestens einer im Aufnahmegehäuse (41) angeordneten Abgasnachbehandlungseinheit (42), die einen als Katalysator und/oder als Partikelfilter dienenden Wabenkörper (43) und einen den Wabenkörper (43) umgebenden, an den Stirnseiten desselben den Wabenkörper (43) freilassenden Wabenkörperträger (44) aufweist,
die mindestens eine Abgasnachbehandlungseinheit (42) über in Durchströmungsrichtung der jeweiligen Abgasnachbehandlungseinheit (42) wirkende erste Vorspannelemente (46) und über senkrecht zur Durchströmungsrichtung der jeweiligen Abgasnachbehandlungseinheit (42) wirkende zweite Vorspannelemente (47) in dem Aufnahmegehäuse (41) vorgespannt aufgenommen ist,
mit Deckeln (59) zum Anschluss des Abgasnachbehandlungssystems (57) an Abgasleitungen,
mit mehreren hintereinander in Reihe geschaltete Abgasnachbehandlungsvorrichtungen (53),
**dadurch gekennzeichnet, dass**
zwischen zwei Abgasnachbehandlungsvorrichtungen (53) ein Gehäuse (58) geschaltet ist, welches zumindest der Aufnahme von Sensoren, wie zum Beispiel Temperatursensoren oder auch Drucksensoren, dient.

2. Abgasnachbehandlungssystem (57) nach Anspruch 1, **dadurch gekennzeichnet, dass** das zwischen zwei Abgasnachbehandlungsvorrichtungen (53) geschaltete Gehäuse (58) ferner der Aufnahme einer Vorrichtung, um ein Reduktionsmittel in den Abgasstrom einzubringen, und/oder eines Rußbläsers dient.

3. Abgasnachbehandlungssystem (57) nach Anspruch 1 oder 2, **dadurch gekennzeichnet, dass**
die in Durchströmungsrichtung der jeweiligen Abgasnachbehandlungseinheit (42) wirkenden ersten Vorspannelemente (46) und die senkrecht zur Durchströmungsrichtung der jeweiligen Abgasnachbehandlungseinheit (42) wirkenden zweiten Vorspannelemente (47) von separaten Vorspannbaugruppen (48) ausgebildet sind,
jede separate Vorspannbaugruppe (48) ein in Durchströmungsrichtung der jeweiligen Abgasnachbehandlungseinheit (42) wirkendes erstes Vorspannelement (46) und mehrere senkrecht zur Durchströmungsrichtung der jeweiligen Abgasnachbehandlungseinheit (42) wirkende zweiten Vorspannelemente (47) aufweist,
die separaten Vorspannbaugruppen (48) an mindestens einem von sich gegenüberliegenden axialen Enden der jeweiligen Abgasnachbehandlungseinheit (42) auf dieselbe aufgesteckt sind, nämlich auf den Wabenkörperträger (44) der jeweiligen Abgasnachbehandlungseinheit (42).

4. Abgasnachbehandlungssystem (57) nach Anspruch 3, **dadurch gekennzeichnet, dass** die separaten Vorspannbaugruppen (48) einwandig oder mehrwandig sind.

5. Abgasnachbehandlungssystem (57) nach Anspruch 1, **dadurch gekennzeichnet, dass** die in Durchströmungsrichtung der jeweiligen Abgasnachbehandlungseinheit (42) wirkenden ersten Vorspannelemente (46) und/oder die senkrecht zur Durchströmungsrichtung der jeweiligen Abgasnachbehandlungseinheit (42) wirkenden zweiten Vorspannelemente (47) als integraler Bestandteil des Wabenkörperträgers (44) der jeweiligen Abgasnachbehandlungseinheit (42) ausgebildet sind.

6. Abgasnachbehandlungssystem (57) nach Anspruch 5, **dadurch gekennzeichnet, dass** der Wabenkörperträger (44) der jeweiligen Abgasnachbehandlungseinheit (42) einwandig oder mehrwandig ist.

7. Abgasnachbehandlungssystem (57) nach einem der Ansprüche 1 bis 6, **dadurch gekennzeichnet, dass** die in Durchströmungsrichtung der jeweiligen Abgasnachbehandlungseinheit (42) wirkenden ersten Vorspannelemente (46) als faltenbalgartige Vorspannelemente ausgebildet sind.

8. Abgasnachbehandlungssystem (57) nach einem der Ansprüche 1 bis 7, **dadurch gekennzeichnet, dass** die senkrecht zur Durchströmungsrichtung der jeweiligen Abgasnachbehandlungseinheit (42) wirkenden zweiten Vorspannelemente (47) als klinkenartige Ausstellungen ausgebildet sind.

9. Abgasnachbehandlungssystem (57) nach Anspruch 8, **dadurch gekennzeichnet, dass** die klinkenartigen Ausstellungen einwandig oder mehrwandig sind.

10. Abgasnachbehandlungssystem (57) nach einem der Ansprüche 1 bis 9, **dadurch gekennzeichnet, dass** Dichtflächen (52) an den in Durchströmungsrichtung der jeweiligen Abgasnachbehandlungseinheit (42) wirkenden ersten Vorspannelementen (46) senkrecht zur Durchströmungsrichtung der jeweiligen Abgasnachbehandlungseinheit (42) ausgerichtet sind.

## Claims

1. An exhaust gas after-treatment system (57) of an internal combustion engine,
having an exhaust gas after-treatment device (53) having a receiving housing (41),
having at least one exhaust gas after-treatment unit (42) arranged in the receiving housing (41), which comprises a honeycomb body (43) serving as catalytic converter and/or as particulate filter and a honeycomb body carrier (44) surrounding the honeycomb body (43) exposing the honeycomb body (43) on the front sides of the same,
the at least one exhaust gas after-treatment unit (42) is received in the receiving housing (41) in a preloaded manner via first preload elements (46) acting in the flow direction of the respective exhaust gas after-treatment unit (42) and via second preload elements (47) acting perpendicularly to the flow direction of the respective exhaust gas after-treatment unit (42),
having lids (59) for connecting the exhaust gas after-treatment system (57) to exhaust lines,
having multiple exhaust gas after-treatment devices (53) connected in series one behind the other,
**characterised in that**
between two exhaust gas after-treatment devices (53) a housing (58) is connected, which serves at least for receiving sensors, such as, for example, temperature sensors or pressure sensors.

2. The exhaust gas after-treatment system (57) according to Claim 1,
**characterised in that**
the housing (58) connected between two exhaust gas after-treatment devices (53) further serves for receiving a device for introducing a reduction agent into the exhaust gas flow and/or a soot blower.

3. The exhaust gas after-treatment system (57) according to Claim 1 or 2,
**characterised in that**
the first preload elements (46) acting in the flow direction of the respective exhaust gas after-treatment unit (42) and the second preload elements (47) acting perpendicularly to the flow direction of the respective exhaust gas after-treatment unit (42) are formed by separate preload assemblies (48),
each separate preload assembly (48) comprises a first preload element (46) acting in the flow direction of the respective exhaust gas after-treatment unit (42) and multiple second preload elements (47) acting perpendicularly to the flow direction of the respective exhaust gas after-treatment unit (42),
the separate preload assemblies (48) on at least one of axially opposite ends of the respective exhaust gas after-treatment unit (42) are plugged onto the same, namely, onto the honeycomb body carrier (44) of the respective exhaust gas after-treatment unit (42).

4. The exhaust gas after-treatment system (57) according to Claim 3,
**characterised in that**
the separate preload assemblies (48) are single-walled or multi-walled.

5. The exhaust gas after-treatment system (57) according to Claim 1,
**characterised in that**
the first preload elements (46) acting in the flow direction of the respective exhaust gas after-treatment unit (42) and/or the second preload elements (47) acting perpendicularly to the flow direction of the respective exhaust gas after-treatment unit (42) are designed as integral part of the honeycomb body carrier (44) of the respective exhaust gas after-treatment unit (42).

6. The exhaust gas after-treatment system (57) according to Claim 5,
**characterised in that**
the honeycomb body carrier (44) of the respective exhaust gas after-treatment unit (42) is single-walled or multi-walled.

7. The exhaust gas after-treatment system (57) according to any one of the Claims 1 to 6,
**characterised in that**
the first preload elements (46) acting in the flow direction of the respective exhaust gas after-treatment unit (42) are designed as bellows-type preload elements.

8. The exhaust gas after-treatment system (57) according to any one of the Claims 1 to 7,
**characterised in that**
the second preload elements (47) acting perpendicularly to the flow direction of the respective exhaust gas after-treatment unit (42) are designed as pawl-like projections.

9. The exhaust gas after-treatment system (57) according to Claim 8,
**characterised in that**
the pawl-like projections are single-walled or multi-walled.

10. The exhaust gas after-treatment system (57) according to any one of the Claims 1 to 9,
**characterised in that**
sealing surfaces (52) on the first preload elements (46) acting in the flow direction of the respective exhaust gas after-treatment unit (42) are oriented perpendicularly to the flow direction of the respective exhaust gas after-treatment unit (42).

## Revendications

1. Système de post-traitement des gaz d'échappement (57) d'un moteur à combustion interne,
comportant un dispositif de post-traitement des gaz d'échappement (53),
comportant un boîtier de réception (41),
comportant au moins une unité de post-traitement des gaz d'échappement (42) disposée dans le boîtier de réception (41), qui présente un corps en nid d'abeille (43) servant de catalyseur et/ou de filtre à particules et un support de corps en nid d'abeille (44) entourant le corps en nid d'abeille (43) et laissant le corps en nid d'abeille (43) libre au niveau de ses faces d'extrémité
la au moins une unité de post-traitement des gaz d'échappement (42) est renfermée de manière précontrainte dans le boîtier de réception (41) via des premiers éléments de précontrainte (46) agissant dans la direction d'écoulement de l'unité de post-traitement des gaz d'échappement (42) respective et via des deuxièmes éléments de précontrainte (47) agissant perpendiculairement à la direction d'écoulement de l'unité de post-traitement des gaz d'échappement (42) respective,
comportant des couvercles (59) pour raccorder le système de post-traitement des gaz d'échappement (57) aux tuyaux d'échappement,
comportant plusieurs dispositifs de post-traitement des gaz d'échappement connectés en série (53),
**caractérisé en ce que**
entre deux dispositifs de post-traitement des gaz d'échappement (53) un boîtier (58) est connecté, qui sert au moins à renfermer des capteurs, comme par exemple des capteurs de température ou des capteurs de pression.

2. Système de post-traitement des gaz d'échappement (57) selon la revendication 1, **caractérisé en ce que** le boîtier (58) connecté entre deux dispositifs de post-traitement des gaz d'échappement (53) sert en outre à recevoir un dispositif de pour introduire un agent réducteur dans le flux de gaz d'échappement et/ou un souffleur de suie.

3. Système de post-traitement des gaz d'échappement (57) selon la revendication 1 ou 2, **caractérisé en ce que** les premiers éléments de précontrainte (46) agissant dans la direction d'écoulement de l'unité de post-traitement des gaz d'échappement (42) respective et les deuxièmes éléments de précontrainte (47) agissant perpendiculairement à la direction d'écoulement de l'unité de post-traitement des gaz d'échappement (42) respective sont formés par des ensembles de précontrainte séparés (48),
chaque ensemble de précontrainte séparé (48) présentant un premier élément de précontrainte (46) agissant dans la direction d'écoulement de l'unité de post-traitement des gaz d'échappement respective (42) et plusieurs deuxièmes éléments de précontrainte (47) agissant perpendiculairement à la direction d'écoulement de l'unité de post-traitement des gaz d'échappement respective (42),
les ensembles de précontrainte séparés (48) sur au moins une des extrémités axiales opposées de l'unité de post-traitement des gaz d'échappement (42) respective sont enfichées sur celle-ci, à savoir sur le support de corps en nid d'abeille (44) de l'unité de post-traitement des gaz d'échappement (42) respective.

4. Système de post-traitement des gaz d'échappement (57) selon la revendication 3, **caractérisé en ce que** les ensembles de précontrainte séparés (48) sont à paroi simple ou à parois multiples.

5. Système de post-traitement des gaz d'échappement (57) selon la revendication 1, **caractérisé en ce que** les premiers éléments de précontrainte (46) agissant dans la direction d'écoulement de l'unité de post-traitement des gaz d'échappement (42) respective et/ou les deuxièmes éléments de précontrainte (47) agissant perpendiculairement à la direction d'écoulement de l'unité de post-traitement des gaz d'échappement (42) respective sont conçus comme un composant intégral du support de corps en nid d'abeille (44) de l'unité de post-traitement des gaz d'échappement (42) respective.

6. Système de post-traitement des gaz d'échappement (57) selon la revendication 5, **caractérisé en ce que** le support en nid d'abeille (44) de l'unité de post-traitement des gaz d'échappement (42) respective est à paroi simple ou à parois multiples.

7. Système de post-traitement des gaz d'échappement (57) selon une des revendications 1 à 6, **caractérisé en ce que** les premiers éléments de précontrainte (46) agissant dans la direction d'écoulement de l'unité de post-traitement des gaz d'échappement respective (42) sont conçus comme des éléments de précontrainte de type soufflet.

8. Système de post-traitement des gaz d'échappement (57) selon une des revendications 1 à 7, **caractérisé en ce que** les deuxièmes éléments de précontrainte (47) agissant perpendiculairement à la direction d'écoulement de l'unité de post-traitement des gaz d'échappement (42) respective sont conçus sous forme de protubérances en forme de cliquet.

9. Système de post-traitement des gaz d'échappement (57) selon la revendication 8, **caractérisé en ce que** les protubérances en forme de cliquet sont à paroi simple ou à parois multiples.

10. Système de post-traitement des gaz d'échappement (57) selon une des revendications 1 à 9, **caractérisé en ce que** des surfaces d'étanchéité (52) sur les premiers éléments de précontrainte (46) agissant dans la direction d'écoulement de l'unité de post-traitement des gaz d'échappement respective (42) sont alignées perpendiculairement à la direction d'écoulement de l'unité de post-traitement des gaz d'échappement respective (42).
